# DEMANDE DE BREVET EUROPEEN

(11) **EP 3 758 174 A1**
(43) Date de publication de la demande: **30.12.2020**
(21) Numéro de dépôt: 20181601.4
(22) Date de dépôt: 23.06.2020
(51) Int. Cl.: H02B 1/01

(54) **ARMATURE POUR UNE ARMOIRE ÉLECTRIQUE, ARMOIRE ÉLECTRIQUE COMPORTANT UNE TELLE ARMATURE**

(30) Priorité: 24.06.2019 FR 1906782
(71) Demandeur: Schneider Electric Industries SAS, 92500 Rueil Malmaison (FR)
(72) Inventeur: DESCHANG, Fabien, 38050 GRENOBLE CEDEX 09 (FR)
(74) Mandataire: Lavoix

(57) **Abrégé**

Une armature comporte des montants verticaux profilés, des rails horizontaux (3) profilés et des raccords d'angle (4) pour connecter mécaniquement des rails horizontaux aux montants verticaux. Au moins une partie des rails horizontaux sont connectés perpendiculairement deux à deux par lesdits raccords d'angle pour former au moins un cadre horizontal, la section transversale de chaque rail horizontal étant partagée entre une partie principale (32) et une partie additionnelle (33), la partie principale (32) coopérant, à l'extrémité de chaque rail horizontal, avec une portion de réception (42, 44) formée sur un desdits raccords d'angle, la partie additionnelle (33) se prolongeant horizontalement en saillie vers l'extérieur de l'armature depuis une face avant de la partie principale et comportant une face inclinée par rapport à la face avant de manière à définir une gouttière (34).

## Description

La présente invention concerne une armature pour une armoire électrique et une armoire électrique comportant une telle armature.

En général, les armoires électriques destinées à accueillir des appareils électriques, tels que des alimentations électriques, des automates industriels, des disjoncteurs, ou tout appareil similaire, comportent une armature métallique rigide à base parallélépipédique dans laquelle sont fixés lesdits appareils électriques.

L'armature est généralement constituée de montants et de rails formés par des profilés métalliques qui sont ensuite connectés mécaniquement par des raccords d'angle placés au niveau des huit coins de l'armature.

L'armoire est ensuite construite en montant sur l'armature des parois telles que des panneaux de protection ou des portes. Des joints d'étanchéité sont intercalés entre la paroi et l'armature de manière à éviter la pénétration de poussière et de liquide à l'intérieur de l'armoire.

Toutefois, un problème récurrent avec les architectures connues est qu'elles permettent à du liquide, par exemple de la condensation ou de l'eau de nettoyage, de pénétrer dans le volume intérieur délimité par l'armature et notamment à s'accumuler au niveau des joints placés entre les parois et l'armature, ce qui tend à causer une usure prématurée de ces joints et à réduire l'étanchéité de l'armoire.

Le document US-3 615 132-B1 décrit une armature d'armoire électrique avec des rails horizontaux présentant une gouttière, ces rails étant assemblés par vissage ou soudage à une pièce d'angle et étant jointifs au niveau de leurs extrémités. Mais ce document ne donne aucun détail sur la façon d'assurer une étanchéité satisfaisante entre les rails horizontaux et la pièce d'angle.

C'est à ces problèmes qu'entend plus particulièrement répondre l'invention, en proposant une armature améliorée pour la construction d'une armoire électrique.

A cet effet, un aspect de l'invention concerne une armature comportant des montants verticaux profilés, des rails horizontaux profilés et des raccords d'angle pour connecter mécaniquement des rails horizontaux aux montants verticaux, dans laquelle au moins une partie des rails horizontaux sont connectés perpendiculairement deux à deux par lesdits raccords d'angle pour former au moins un cadre horizontal, la section transversale de chaque rail horizontal étant partagée entre une partie principale et une partie additionnelle, la partie principale coopérant, à l'extrémité de chaque rail horizontal, avec une portion de réception formée sur un desdits raccord d'angle, la partie additionnelle se prolongeant horizontalement en saillie vers l'extérieur de l'armature depuis une face avant de la partie principale et comportant une face inclinée par rapport à la face avant de manière à définir une gouttière. Selon l'invention, l'extrémité de chaque rail horizontal est soudée sur une face latérale du raccord d'angle correspondant.

Grâce à l'invention, la partie additionnelle protège la zone située sous les rails horizontaux du cadre supérieur contre les projections de liquide, ces dernières étant collectées et stockées par la gouttière, les empêchant ainsi de pénétrer dans le volume défini par l'armature.

Selon des aspects avantageux mais non obligatoires, une telle armature peut incorporer une ou plusieurs des caractéristiques suivantes, prises isolément ou suivant toute combinaison techniquement admissible :
- L'angle formé entre la face avant et la face inclinée est compris entre 60° et 75°.
- La section de la partie principale a une forme polygonale.
- La face avant et la face inclinée sont raccordées par une portion recourbée.
- La partie principale de chaque rail horizontal est emboîtée sur ou dans une des portions de réception.
- Les rails horizontaux sont réalisés en acier galvanisé.
- La partie additionnelle présente une section en forme de triangle.

Selon un autre aspect, l'invention concerne une armoire électrique comportant une armature telle que décrite précédemment, une paroi montée sur l'armature et un joint d'étanchéité intercalé entre la paroi et un des rails horizontaux.

L'invention sera mieux comprise et d'autres avantages de celle-ci apparaîtront plus clairement à la lumière de la description qui va suivre d'un mode de réalisation d'une armature donnée uniquement à titre d'exemple et faite en référence aux dessins annexés, dans lesquels :
[Fig 1] la figure 1 est une représentation schématique d'une armature pour une armoire électrique conforme à des modes de réalisation de l'invention ;
[Fig 2] la figure 2 est une représentation schématique, selon vue en perspective, d'un rail horizontal et d'un raccord d'angle de l'armature de la figure 1 ;
[Fig 3] la figure 3 est une représentation schématique, vue selon un plan de coupe latéral, d'un premier mode de réalisation du rail horizontal de la figure 2 ;
[Fig 4] la figure 4 est une représentation schématique, vue selon un plan de coupe latéral, d'un deuxième mode de réalisation du rail horizontal de la figure 2.

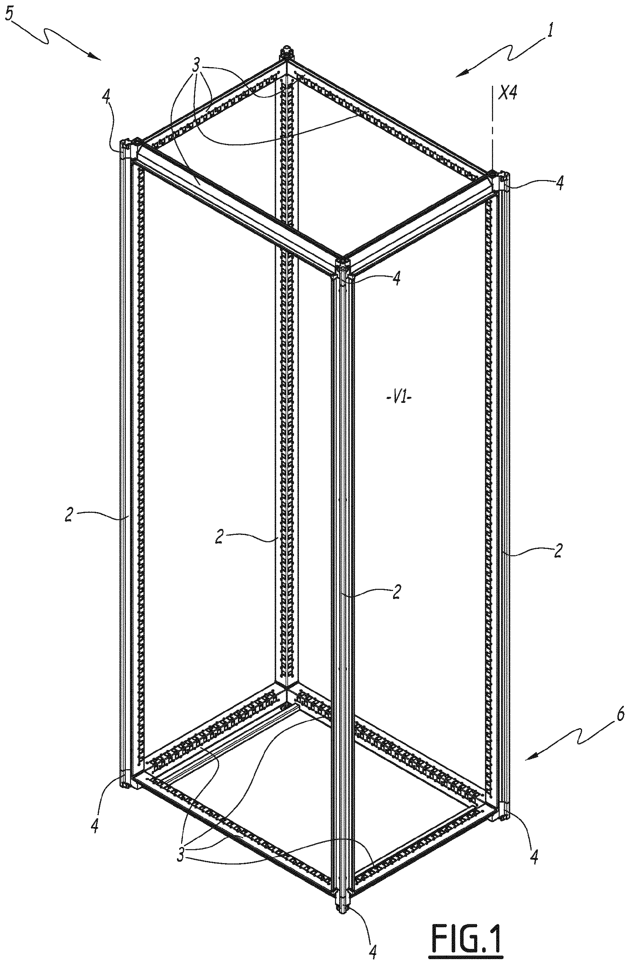

La figure 1 représente une armature 1, utilisée par exemple comme structure porteuse d'une armoire électrique.

Dans l'exemple illustré, l'armature 1 est représentée posée sur une surface horizontale. L'armature 1 présente une forme de pavé, et définit un volume interne V1.

L'armature 1 comporte des montants verticaux 2 profilés, des rails horizontaux 3 profilés et des raccords d'angle 4 pour connecter mécaniquement des rails 3 aux montants 2.

Les montants 2 s'étendent parallèlement selon une direction verticale X4.

Au moins une partie des rails 3 sont connectés perpendiculairement deux à deux par lesdits raccords d'angle pour former au moins un cadre horizontal, par exemple un cadre supérieur 5 et un cadre inférieur 6. Les montants 2 relient le cadre supérieur 5 au cadre inférieur 6.

Dans l'exemple illustré, l'armature 1 comprend quatre montants 2 disposés verticalement, par exemple de façon à former les arêtes latérales dudit pavé.

Les cadres comprennent chacun quatre rails 3, disposés sur les arêtes des faces supérieure et inférieure du pavé, et quatre raccords d'angle 4, un raccord d'angle 4 étant situé à chacun des coins des cadre 5 et 6.

Par exemple, les rails 3 et les montants 2 sont réalisés en métal, de préférence en acier galvanisé, cet exemple n'étant pas limitatif.

Avantageusement, tous les raccords d'angle 4 présentent ici la même forme, ce qui simplifie la fabrication et la gestion des stocks de pièces détachées. En variante non représentée, les raccords d'angle 4 peuvent présenter des formes différentes.

De façon analogue, les quatre montants 2 sont identiques, tandis que les rails 3 des cadres 5 et 6 sont avantageusement identiques.

Dans l'exemple illustré, les cadres 5 et 6 sont identiques, mais le cadre inférieur 6 est retourné par rapport au cadre supérieur 5.

Par commodité, dans la suite de la description les termes « arrière » et « avant » sont définis respectivement comme « orienté vers le volume interne V1 » et « orienté à l'opposé du volume interne V1 ».

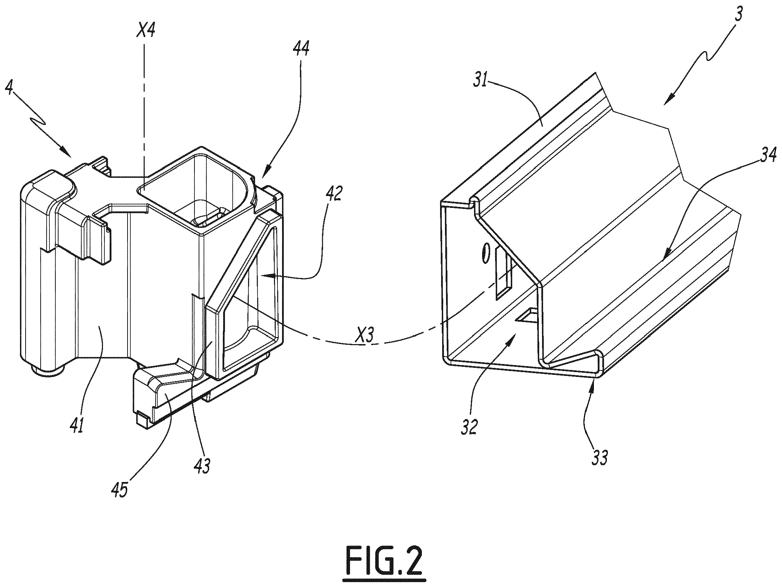

La figure 2 représente plus en détail la connexion entre un rail 3 et un raccord d'angle 4. Le rail 3 s'étend selon un axe longitudinal X3 orienté horizontalement.

Le rail 3 est fabriqué par profilage et comporte une paroi métallique 31 repliée sur elle-même qui délimite des faces du rail 3.

De préférence, la forme de la section transverse du rail 3 est la même sur toute la longueur du rail 3. La section transverse est perpendiculaire à l'axe X3.

La section transverse du rail 3 est partagée entre une partie principale 32 et une partie additionnelle 33 se prolongeant en saillie vers l'avant du rail 3, c'est-à-dire vers l'extérieur de l'armature 1 lorsque celle-ci est en configuration assemblée. Une zone creuse en forme de gouttière 34 est formée à la jonction entre les parties 32 et 33.

Par exemple, la section de la partie principale 32 a une forme polygonale. La section de la partie additionnelle 33 a une forme de triangle, dont le sommet opposé à la base est ici en contact avec la partie principale 32.

Le raccord d'angle 4 comporte un corps 41 sur lequel est formé au moins une portion de réception 42 de forme complémentaire à la section de la partie principale 32. Par exemple, la portion de réception 42 est délimitée par une paroi saillante 43 faisant partie intégrante avec le corps 41.

La portion de réception 42 est configurée pour coopérer avec l'extrémité du rail 3 de manière à solidariser mécaniquement ledit rail 3 audit raccord d'angle 4.

Par exemple, la partie principale 32 du rail 3 est emboîtée sur la portion de réception 42. Dans l'exemple illustrée, la paroi 43 formant la portion de réception 42 est dimensionnée de manière à être reçue dans le rail 3 à l'intérieur du volume délimité par la paroi 31. En variante, la paroi 43 est dimensionnée de sorte que la partie principale 32 du rail 3 puisse être emboîtée dans la portion de réception 42.

Une deuxième portion de réception, portant ici la référence 44 et étant similaire à la portion de réception 42, est formée sur une autre face du corps 41 pour coopérer avec un autre rail 3.

Le raccord d'angle 4 comporte également une portion de base 45 s'étendant depuis le corps 41 et comportant une surface contre laquelle l'extrémité de la partie 33 vient en contact lorsque le rail 3 est connecté au raccord d'angle 4.

Selon des exemples, le corps 41 est en métal, par exemple en acier moulé par cire perdue. Cet exemple n'est pas limitatif.

Selon des modes de réalisation optionnels, le rail 3 peut être en outre fixé sur le raccord d'angle 4 au moyen d'une soudure.

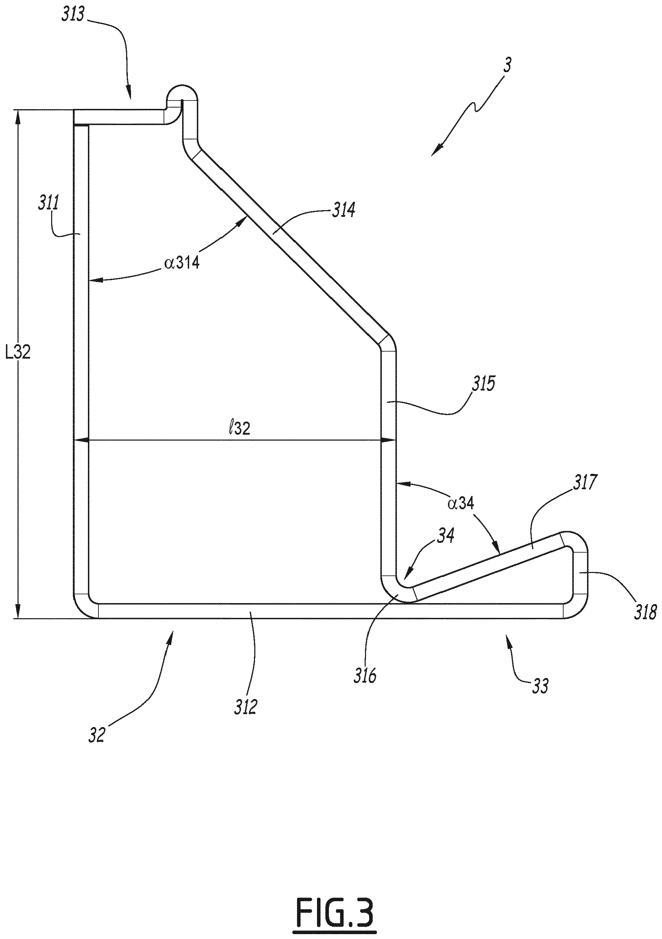

La figure 3 représente un premier mode de réalisation du rail 3, dont l'extrémité est ici visible dans un plan perpendiculaire à l'axe X3.

La partie principale 32 comporte une face verticale 311, une face de base 312, une face supérieure 313 essentiellement parallèle à la face 312, puis une face inclinée 314 et une face avant 315 verticale qui redescendent en direction de la face 312.

En pratique, ces faces sont connectées entre elles et correspondent à des faces du profilé formant le rail 3. En d'autres termes, l'orientation et l'agencement relatif desdites faces sont le résultat du pliage du profilé formant le rail 3.

La face 312 est perpendiculaire à la face 311 et est commune avec la partie additionnelle 33. Dans l'exemple illustré, le rail 3 appartient au cadre supérieur 5 et, du fait de l'orientation du rail 3, la face 312 forme une paroi inférieure. Mais dans les cas où le rail 3 est orienté différemment, comme cela est le cas dans le cadre inférieur 6, la face 312 peut alors former une paroi supérieure de la partie 32.

La face supérieure 313 s'étend depuis la partie opposée de la face 311 en étant sensiblement parallèle à la face 312. La face 313 peut comporter une portion repliée dont la section a une forme de U et qui forme une butée supérieure s'étendant le long du rail 3.

La partie additionnelle 33 comporte, en partant de la base de la face avant 315, une portion recourbée 316, ici de forme arrondie, puis une face inclinée 317 qui remonte en s'éloignant de la face avant 315 de manière à définir la gouttière 34. La partie additionnelle 33 comporte également une face avant 318 verticale qui connecte les extrémités avant des faces 317 et 312.

Selon des exemples donnés à titre illustratif et non nécessairement limitatif, l'angle α34 formé entre la face avant 315 de la partie 32 et la face inclinée 317 de la partie 33 est compris entre 60° et 75°, de préférence compris entre 70° et 71°.

Toujours selon des exemples non nécessairement limitatifs, la largeur L32 mesurée entre les faces 312 et 313 est comprise entre 35mm et 45mm. La largeur f32 mesurée entre les faces 311 et 315 est comprise entre 25mm et 30mm. L'angle α314 formé entre la face inclinée 314 et la face arrière 311 est compris entre 40° et 60°, de préférence égale à 45°. La largeur maximale de la section du rail 3, mesurée entre les faces 311 et 318, est par exemple comprise entre 35mm et 45mm, de préférence égale à 41,5mm.

Grâce à l'invention, le rail 3 peut être facilement assemblé avec le raccord d'angle 4 pour former les cadres 5 et 6. L'armature 1 présente ainsi une conception modulaire et peut être aisément montée sur site sans nécessairement devoir être au moins partiellement préassemblée en usine.

La présence de la gouttière 34 permet de collecter du liquide, par exemple de l'eau issue de condensation ou de projections, et ainsi d'éviter que ce liquide ne puisse pénétrer sous le rail 3, par exemple dans l'intérieur de l'armature 1.

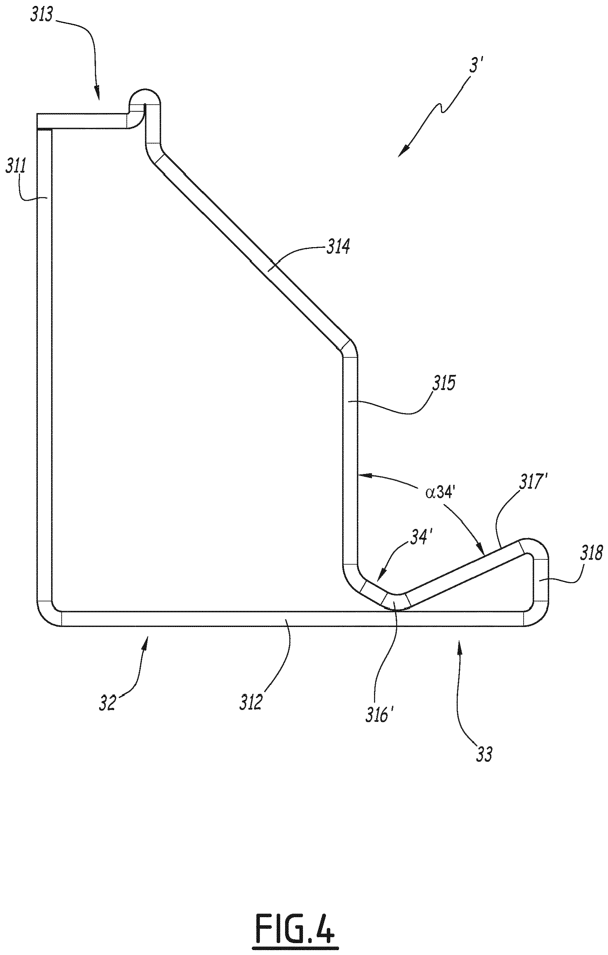

La figure 4 représente un deuxième mode de réalisation du rail 3, portant ici la référence numérique 3' et dont l'extrémité est ici visible dans un plan perpendiculaire à l'axe X3.

Le rail 3' est essentiellement identique au rail 3 précédemment décrit et n'en diffère que par la forme de la gouttière 34' qui, bien qu'ayant une fonction analogue à celle de la gouttière 34, présente des dimensions différentes.

Par exemple, la gouttière 34' présente une largeur plus élevée que la gouttière 34. La portion recourbée 316 est ici remplacée par une portion recourbée 316' comprenant deux portions coudées et un fond plat relié aux parois 315 et 317' par les deux portions coudées. De préférence, les dimensions de la partie principale 32 ne sont pas modifiées. En conséquence, la paroi 317 est remplacée par une paroi inclinée 317' présentant une longueur et une inclinaison différentes.

Selon des exemples non illustrées, une armoire électrique est construite à partir de l'armature 1.

L'armoire électrique comporte une armature 1 selon les modes de mise en œuvre précédemment définis et comprend en outre une paroi montée sur l'armature 1 et un joint d'étanchéité intercalé entre la paroi et un des rails horizontaux 3.

Par exemple, la paroi est disposée contre la face avant du rail 3, en avant de la partie 33. Le joint d'étanchéité est serré entre ladite paroi et la face 318. Par exemple, le joint est en matériau élastomère.

Selon des exemples, des parois peuvent être montés sur l'armature pour couvrir chacune des faces de l'armature 1 et fermer au moins partiellement le volume V1. Un joint d'étanchéité similaire à celui décrit peut être associé à chacune desdites parois.

Par exemple, les parois sont des portes ou des panneaux.

Une telle armoire électrique est par exemple destinée à accueillir un ou plusieurs appareils électriques, tels que des alimentations électriques, des automates industriels, des disjoncteurs, ou tout appareil similaire.

Le ou les appareils électriques sont, par exemple, reçus à l'intérieur de l'armoire et peuvent être montés directement sur l'armature, ou bien montés sur des étagères ou dans des baies de réception elles-mêmes montées sur l'armature 1.

Les modes de réalisation et les variantes envisagés ci-dessus peuvent être combinés entre eux pour donner naissance à de nouveaux modes de réalisation.

## Revendications

1. Armature (1), comportant des montants verticaux (2) profilés, des rails horizontaux (3) profilés et des raccords d'angle (4) pour connecter mécaniquement des rails horizontaux (3) aux montants verticaux (2), dans laquelle au moins une partie des rails horizontaux (3) sont connectés perpendiculairement deux à deux par lesdits raccords d'angle pour former au moins un cadre horizontal (5, 6), la section transversale de chaque rail horizontal étant partagée entre une partie principale (32) et une partie additionnelle (33), la partie principale (32) coopérant, à l'extrémité de chaque rail horizontal, avec une portion de réception (42, 44) formée sur un desdits raccords d'angle (4), la partie additionnelle (33) se prolongeant horizontalement en saillie vers l'extérieur de l'armature depuis une face avant (315) de la partie principale et comportant une face inclinée (317, 317') par rapport à la face avant (315) de manière à définir une gouttière (34), **caractérisé en ce que** l'extrémité de chaque rail horizontal (3) est soudée sur une face latérale du raccord d'angle (4) correspondant.

2. Armature selon la revendication 1, dans laquelle l'angle (a34) formé entre la face avant et la face inclinée est compris entre 60° et 75°.

3. Armature selon l'une quelconque des revendications précédentes, dans laquelle la section de la partie principale (32) a une forme polygonale.

4. Armature selon l'une quelconque des revendications précédentes, dans laquelle la face avant et la face inclinée sont raccordées par une portion recourbée (316).

5. Armature selon l'une quelconque des revendications précédentes, dans laquelle la partie principale (32) de chaque rail horizontal (3) est emboîtée sur ou dans une des portions de réception (42, 44).

6. Armature selon l'une quelconque des revendications précédentes, dans laquelle les rails horizontaux (3) sont réalisés en acier galvanisé.

7. Armature selon l'une quelconque des revendications précédentes, dans laquelle la partie additionnelle (33) présente une section en forme de triangle.

8. Armoire électrique **caractérisée en ce qu'**elle comporte une armature (1) conforme à l'une quelconque des revendications précédentes, une paroi montée sur l'armature et un joint d'étanchéité intercalé entre la paroi et un des rails horizontaux.
